# EUROPÄISCHE PATENTSCHRIFT

(11) **EP 2 147 841 B1**
(45) Veröffentlichungstag und Bekanntmachung des Hinweises auf die Patenterteilung: **28.11.2012**
(21) Anmeldenummer: 09163445.1
(22) Anmeldetag: 23.06.2009
(51) Int. Cl.: B60W 30/18, F16D 48/08, B60W 10/06, B60W 10/10, B60W 10/02

(54) **Verfahren zum Ansteuern eines automatisierten Getriebes**
Method for controlling an automated transmission
Procédé de commande d'une transmission automatisée

(30) Priorität: 24.07.2008 DE 102008040678
(43) Veröffentlichungstag der Anmeldung: 27.01.2010
(73) Patentinhaber: ZF Friedrichshafen AG, 88038 Friedrichshafen (DE)
(72) Erfinder: Moser, Wilhelm, 88630, Pfullendorf (DE); Mansour, Rachid, 88677, Markdorf (DE)

(56) Entgegenhaltungen:
- EP-A2- 0 709 246
- WO-A1-2007/100278
- DE-A1- 10 240 068

## Beschreibung

Die vorliegende Erfindung betrifft ein Verfahren zum Ansteuern eines automatisierten Getriebes gemäß der im Oberbegriff des Patentanspruches 1 näher definierten Art.

Aus der Fahrzeugtechnik sind Verfahren zum Ansteuern von automatisierten Schaltgetrieben in Fahrzeugen bekannt. Das automatisierte Schaltgetriebe umfasst eine Kupplungssteuerung und eine Getriebesteuerung sowie zumindest ein Steuergerät, mit dem die Kupplungsteuerung und die Getriebesteuerung angesteuert werden. Das Steuergerät ist über ein Bussystem mit einem Steuergerät des Verbrennungsmotors gekoppelt. Ein Anfahrvorgang bei dem Fahrzeug wird über das Steuergerät angesteuert, wenn bei eingelegtem Gang im Stillstand des Fahrzeuges die Fahrpedallstellung einen definierten Grenzwert überschreitet. Die Fahrpedalstellung wird von dem Motorsteuergerät über das Bussystem an das Steuergerät übermittelt. Das Steuergerät regelt beim Anfahren die Motordrehzahl auf einen Zielwert ein, indem das Motormoment vorgegeben wird. Die schleifende Kupplung wird soweit über die Kupplungssteuerung geschlossen, bis das vorgegebene Moment erreicht wird. Dieser Zustand wird beibehalten bis die Getriebeeingangsdrehzahl die Motordrehzahl erreicht oder das Fahrpedal entlastet wird. Bei Drehzahlgleichheit kann die Kupplung komplett geschlossen werden und das Motormoment auf das Fahrerwunschmoment angehoben werden. Danach ist der Anfahrvorgang abgeschlossen. Wenn das Fahrpedal wieder entlastet wird, kann die Kupplung über das Steuergerät geöffnet werden.

Ferner ist aus der Druckschrift EP 0 709 246 B1 ein Verfahren zur Steuerung einer automatischen Fahrzeugkupplung bekannt. Die Fahrzeugkupplung kann bei dem bekannten Verfahren neben der vollständig geöffneten Position und der geschlossenen Position auch an einer Berührungsposition und an einer Annäherungsposition gehalten werden. Die Annäherungsposition ist eine Position, welche zwischen der vollständig geöffneten Position und der Berührungsposition liegt. In einem geöffneten Zustand der Fahrzeugkupplung, wenn ein Schließen der Kupplung erwartet wird, wird die Fahrzeugkupplung in die Annäherungsposition bewegt und dort gehalten, um das Schließen der Kupplung zu erwarten. Die Kupplung kann somit schneller in die Berührungsposition verstellt werden.

Beispielsweise bei einer so genannten Start-Stopp-Anwendung, bei der ein Verbrennungsmotor schon bei einem kurzzeitigen Stillstand des Fahrzeuges abgeschaltet wird, kann es vorkommen, dass der Verbrennungsmotor unmittelbar vor dem Anfahrvorgang ausgeschaltet ist. In diesem Fall sollte der Verbrennungsmotor möglichst schnell gestartet werden, wenn der Fahrer das Fahrpedal betätigt und somit seinen Anfahrwunsch andeutet. Bei dem bekannten Verfahren ergibt sich eine deutliche Verzögerung zwischen dem Fahrerwunsch und der Fahrzeugreaktion.

WO 2007/100278 A1 offenbart ein Verfahren nach dem Oberbegriff des Anspruchs 1.

Demnach liegt der vorliegenden Erfindung die Aufgabe zu Grunde, ein Verfahren der eingangs beschriebenen Gattung vorzuschlagen, bei dem eine Verzögerung zwischen Fahrerwunsch und Fahrzeugreaktion minimiert und dadurch der Fahrkomfort insbesondere bei einem Anfahrvorgang verbessert wird.

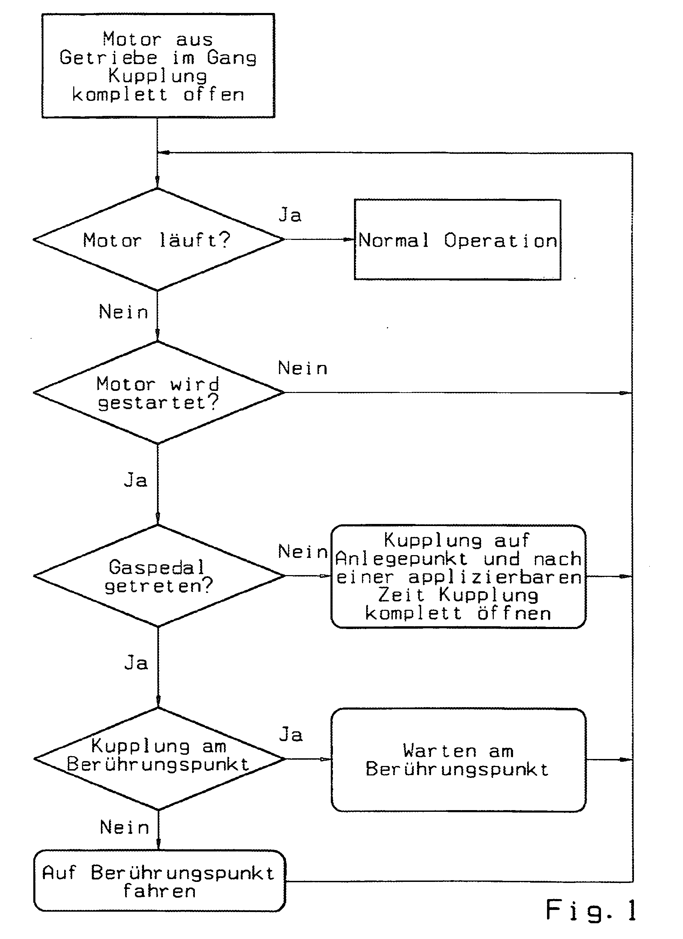

Diese Aufgabe wird erfindungsgemäß durch die Merkmale des Patentanspruches 1 gelöst. Weitere vorteilhafte Ausgestaltungen ergeben sich aus den Unteransprüchen und der Zeichnung.

Demnach wird ein Verfahren zum Ansteuern eines automatisierten Getriebes in einem Antriebsstrang eines Fahrzeuges vorgeschlagen, bei dem ein Anfahrvorgang über zumindest ein Getriebesteuergerät zum Ansteuern einer Kupplungssteuerung und einer Getriebesteuerung zur Drehmomentübertragung zwischen einem Antriebsmotor und dem Getriebe im Antriebsstrang durchgeführt wird, wenn ein Anfahrwunsch des Fahrers detektiert wird, wobei beim Detektieren des Anfahrwunsches überprüft wird, ob der Antriebsmotor aktiviert ist und wobei die geöffnete Kupplung bereits in einen Berührungspunkt zur Drehmomentübertragung verstellt wird.

Auf diese Weise kann bei der Ansteuerung des Anfahrvorganges berücksichtigt werden, ob der Antriebsmotor aktiv oder nicht aktiv ist, so dass insbesondere bei nicht aktivem Antriebsmotor Maßnahmen getroffen werden können, um eine Verzögerung und somit eine Komforteinbuße während des Anfahrvorganges zu verhindern.

Im Rahmen einer möglichen Ausführungsvariante der Erfindung kann beispielsweise vorgesehen sein, dass bei dem erfindungsgemäßen Verfahren die Kupplung bereits vor dem Starten des Antriebsmotors z. B. in einen Berührungspunkt oder dergleichen zum Übertragen eines Drehmomentes bewegt beziehungsweise verstellt wird. Vorzugsweise kann die Kupplung in diesem Zustand gehalten werden, bis der Antriebsmotor später aktiviert wird. Somit wird die Kupplung bereits für den Anfahrvorgang vorbereitet, um nach dem Start des Antriebsmotors keine Verzögerung beim Anfahrvorgang zu erhalten. Auf diese Weise kann die Kupplung mit dem Drehmomentaufbau sofort beginnen, nachdem der Antriebsmotor aktiviert wird.

In besonders vorteilhafter Weise kann gemäß einer weiteren Ausführungsvariante der Erfindung vorgesehen sein, dass die Kupplung in den Anlegepunkt verstellt wird, wenn der Anfahrvorgang abgebrochen oder das Aktivieren des Antriebsmotors nicht durchgeführt wird. Somit kann auch in diesem Zustand eine Verzögerung des eventuell später erfolgenden Anfahrvorganges vermieden werden. Dabei wird als Anlegepunkt der Zustand der Kupplung bezeichnet, indem die Kupplung von dem Berührungspunkt zuzüglich eines Sicherheitsabstandes z. B. in Richtung öffnen entfernt ist.

Sollte der Antriebsmotor in diesem Zustand auch nach einer vorbestimmten Zeitspanne, welche applizierbar ist, nicht aktiviert werden, kann vorgesehen sein, dass die Kupplung von dem Anlegepunkt in den vollständig geöffneten Zustand oder dergleichen verstellt wird.

In dem Zustand, in dem im Antriebsstrang ein Gang eingelegt, die Kupplung komplett geöffnet und der Antriebsmotor nicht aktiviert ist, überprüft das erfindungsgemäße Verfahren, ob der Antriebsmotor aktiviert wird. Wenn dies der Fall ist, kann der normalerweise vorgesehene Ablauf für den Anfahrvorgang ausgeführt werden. Sollte der Antriebsmotor nicht aktiviert werden, wird eine Überwachung eingerichtet, welche das Starten des Antriebsmotors überwacht. Wenn beispielsweise der Antriebsmotor gestartet worden ist, wird zusätzlich überprüft, ob das Gaspedal beziehungsweise Fahrpedal betätigt wird. Bei betätigtem Fahrpedal wird weiter überprüft, ob sich die Kupplung am Berührungspunkt befindet, wenn dies nicht der Fall ist, wird die Kupplung in den Berührungspunkt verfahren werden. Danach kann im Rahmen des erfindungsgemäßen Verfahrens wieder geprüft werden, ob der Antriebsmotor aktiviert ist. Wenn dies der Fall ist, kann der normale Anfahrvorgang durchgeführt werden.

Mit dem erfindungsgemäßen Verfahren kann ein besonders schnelles Anlegen der Kupplung beim Start des Antriebsmotors im Rahmen einer Start-Stopp-Funktion erfolgen.

Nachfolgend wird die vorliegende Erfindung anhand der Zeichnung näher erläutert. Die einzige Figur der Erfindung zeigt ein mögliches Ablaufdiagramm mit einem exemplarisch angegebenen Ablauf einer möglichen Ausführungsvariante eines erfindungsgemäßen Verfahrens zum Ansteuern eines automatisierten Getriebes in einem Antriebsstrang eines Fahrzeuges.

Bei dem lediglich beispielhaft dargestellten Ablaufdiagramm beginnt das Verfahren in dem Zustand, bei dem im Getriebe ein Gang eingelegt ist und die Kupplung komplett geöffnet ist. Der Antriebsmotor ist in diesem Zustand nicht aktiviert. Beispielsweise bei einer Start-Stopp-Funktion kann der Antriebsmotor unmittelbar vor dem Anfahrvorgang ausgeschaltet sein. In diesem Fall wird im Rahmen des erfindungsgemäßen Verfahrens regelmäßig, zum Beispiel in einem vorbestimmten Intervall, geprüft, ob der Antriebsmotor aktiviert ist. Wenn dies der Fall ist, wird der normale Anfahrvorgang durchgeführt. Wenn dies nicht der Fall ist, wird weiter geprüft, wann der Antriebsmotor gestartet wird. Bei nicht aktiviertem Antriebsmotor kehrt das erfindungsgemäße Verfahren zum Anfang zurück.

Sollte der Antriebsmotor jedoch gestartet werden, wird zusätzlich geprüft, ob das Fahrpedal betätigt wird. Bei nicht betätigtem Fahrpedal wird die Kupplung im Rahmen des erfindungsgemäßen Verfahrens auf einen Anlegepunkt Verfahren und nach einer applizierbaren Zeit vollständig geöffnet. Der Anlegepunkt entspricht dem Berührungspunkt zuzüglich eines vorbestimmten Sicherheitsabstandes in Richtung geöffnete Kupplung.

Wenn das Fahrpedal betätigt wird, wird geprüft, ob sich die Kupplung am Berührungspunkt befindet. Der Berührungspunkt der Kupplung ist **dadurch gekennzeichnet, dass** in dieser Position die Kupplung ein Drehmoment übertragen kann. Sollte die Kupplung sich bereits am Berührungspunkt befinden, verharrt die Kupplung in dieser Position und das Verfahren kehrt zum Anfang zurück, um zu überwachen, wann der Antriebsmotor gestartet wird, um dann sofort mit dem Drehmomentaufbau wie bei einem normalen Anfahrvorgang beginnen zu können.

Wenn die Kupplung sich nicht am Berührungspunkt befindet, wird sie zum Berührungspunkt verfahren und das Verfahren kehrt auch dann zum Anfang zurück, um wieder zu überwachen, wann der Antriebsmotor gestartet wird, um den normalen Anfahrvorgang durchführen zu können.

Durch das vorgeschlagene Verstellen der Kupplung in den Berührungspunkt kann bei dem vorgeschlagenen erfindungsgemäßen Verfahren eine Verzögerung des Anfahrvorganges auch bei ausgeschaltetem Antriebsmotor und dadurch eine Optimierung des Komfortverhaltens beim Fahrzeug erreicht werden. Vorzugsweise können bei dem Verfahren weitere Verfahrensschritte hinzugefügt oder die vorhandenen Verfahrensschritte auf andere Art und Weise miteinander kombiniert werden.

## Patentansprüche

1. Verfahren zum Ansteuern eines automatisierten Getriebes in einem Antriebsstrang eines Fahrzeuges, bei dem ein Anfahrvorgang über zumindest ein Getriebesteuergerät zum Ansteuern einer Kupplungssteuerung und einer Getriebesteuerung zur Drehmomentübertragung zwischen einem Antriebsmotor und dem Getriebe im Antriebsstrang durchgeführt wird, wenn ein Anfahrwunsch des Fahrers detektiert wird, wobei beim Detektieren des Anfahrwunsches überprüft wird, ob der Antriebsmotor aktiv ist und die geöffnete Kupplung in einen Berührungspunkt zur Drehmomentübertragung verstellt wird, **dadurch gekennzeichnet, dass** bei eingelegtem Gang und bei vollständig geöffneter Kupplung überprüft wird, ob der Antriebsmotor aktiviert ist, dass bei nicht aktiviertem Antriebsmotor überwacht wird, wann der Motor gestartet wird, dass bei aktiviertem Antriebsmotor überwacht wird, ob das Fahrpedal betätigt wird, dass bei betätigtem Fahrpedal überprüft wird, ob sich die Kupplung am Berührungspunkt befindet, und dass die Kupplung in den Berührungspunkt verstellt wird, wenn sich diese nicht am Berührungspunkt befindet.

2. Verfahren nach Anspruch 1, **dadurch gekennzeichnet, dass** die Kupplung in dem Berührungspunkt zum Übertragen eines Drehmomentes verbleibt, bis der Antriebsmotor aktiviert wird.

3. Verfahren nach Anspruch 2, **dadurch gekennzeichnet, dass** die Kupplung mit der Drehmomentaufbau beginnt, sobald der Antriebsmotor aktiviert wird.

4. Verfahren nach einem der vorangehenden Ansprüche, **dadurch gekennzeichnet, dass** die Kupplung in einen Anlegepunkt verstellt wird, wenn der Anfahrvorgang abgebrochen oder das Aktivieren des Antriebsmotors nicht durchgeführt wird.

5. Verfahren nach Anspruch 4, **dadurch gekennzeichnet, dass** die Kupplung nach einer applizierbaren Zeitspanne von dem Anlegepunkt in den vollständig geöffneten Zustand verstellt wird.

6. Verfahren nach Anspruch 1, **dadurch gekennzeichnet, dass** danach die anfängliche Überprüfung, ob der Antriebsmotor aktiviert ist, wiederholt wird und bei aktivierten Antriebsmotor der Anfahrvorgang durchgeführt wird.

## Claims

1. Method for controlling an automated transmission in a drivetrain of a vehicle, in which method, when a starting demand of the driver is detected, a starting process is performed by means of at least one transmission control unit for controlling a clutch controller and a transmission controller for transmission of torque between a drive engine and the transmission in the drivetrain, wherein upon the detection of the starting demand, it is checked whether the drive engine is active and the open clutch is adjusted to a biting point for torque transmission, **characterized in that**, if a gear is engaged and the clutch is fully open, it is checked whether the drive engine is active, **in that**, if the drive engine is not active, it is monitored as to when the engine is started, **in that**, if the drive engine is active, it is monitored whether the accelerator pedal is being actuated, **in that**, if the accelerator pedal is being actuated, it is monitored whether the clutch is situated at the biting point, and **in that** the clutch is adjusted to the biting point if it is not situated at the biting point.

2. Method according to Claim 1, **characterized in that** the clutch remains at the biting point for transmitting a torque until the drive engine is activated.

3. Method according to Claim 2, **characterized in that** the clutch commences the build-up of torque when the drive engine is activated.

4. Method according to one of the preceding claims, **characterized in that** the clutch is adjusted to a contact point if the starting process is terminated or the activation of the drive engine does not take place.

5. Method according to Claim 4, **characterized in that** the clutch is adjusted from the contact point into the fully open state after an applicable time period.

6. Method according to Claim 1, **characterized in that**, subsequently, the initial check as to whether the drive engine is active is repeated, and the starting process is carried out if the drive engine is active.

## Revendications

1. Procédé de commande d'une boîte de vitesses automatisée dans une chaîne cinématique de véhicule, dans lequel un processus de démarrage est mis en oeuvre dans la chaîne cinématique par le biais d'au moins un appareil de commande de boîte de vitesses servant à commander un élément de commande d'embrayage et un élément de commande de boîte de vitesses servant à transmettre un couple de rotation entre un moteur d'entraînement et la boîte de vitesses, lorsqu'un souhait de démarrage du conducteur est détecté, un contrôle étant effectué à la détection du souhait de démarrage pour savoir si le moteur d'entraînement est actif et l'embrayage ouvert est déplacé dans un point de contact permettant la transmission du couple de rotation, **caractérisé en ce que** lorsque le rapport est engagé et que l'embrayage est entièrement ouvert, on contrôle si le moteur d'entraînement est activé, que lorsque le moteur d'entraînement n'est pas activé, on surveille lorsque le moteur est démarré et que lorsque le moteur d'entraînement est activé, on surveille si la pédale d'accélérateur est actionnée, et lorsque la pédale d'accélérateur est actionnée, on contrôle si l'embrayage se trouve contre le point de contact et que l'embrayage est déplacé dans le point de contact lorsque celui-ci ne se trouve pas contre le point de contact.

2. Procédé selon la revendication 1, **caractérisé en ce que** l'embrayage reste dans le point de contact de façon à transmettre un couple de rotation jusqu'à ce que le moteur d'entraînement soit activé.

3. Procédé selon la revendication 2, **caractérisé en ce que** l'embrayage commence avec une mise en place du couple de rotation dès l'activation du moteur d'entraînement.

4. Procédé selon l'une quelconque des revendications précédentes, **caractérisé en ce que** l'embrayage est déplacé dans un point d'appui lorsque le processus de démarrage est interrompu ou que l'activation du moteur d'entraînement n'a pas lieu.

5. Procédé selon la revendication 4, **caractérisé en ce que** l'embrayage est déplacé après un intervalle de temps applicable du point d'appui dans l'état entièrement ouvert.

6. Procédé selon la revendication 1, **caractérisé en ce qu'**ensuite, le début du contrôle permettant de vérifier si le moteur d'entraînement est activé est répété et que le processus de démarrage est mis en oeuvre lorsque le moteur d'entraînement est activé.
